# EUROPEAN PATENT SPECIFICATION

(11) **EP 0 842 596 B1**
(45) Date of publication and mention of the grant of the patent: **10.10.2001**
(21) Application number: 97203492.0
(22) Date of filing: 10.11.1997
(51) Int. Cl.: A01D 34/68, F16H 7/14

(54) **Device for fastening a drive unit to a lawn-mower body**
Vorrichtung zur Befestigung einer Antriebseinheit an Rasenmähergehäuse
Dispositif de fixation d'une unité d'entraînement au carter d'une tondeuse à gazon

(30) Priority: 13.11.1996 IT MI962353
(43) Date of publication of application: 20.05.1998
(73) Proprietor: CASTELGARDEN S.P.A., I-31033 Castelfranco Veneto (Treviso ) (IT)
(72) Inventor: Ferrari, Maurizio, 20144 Milano (IT)
(74) Representative: Mittler, Enrico

(56) References cited:
- DE-C- 879 785
- FR-A- 564 951
- FR-A- 2 201 366
- US-A- 2 691 421
- US-A- 2 742 750
- US-A- 3 593 590
- US-A- 4 317 325
- US-A- 4 907 401

## Description

The present invention refers to a device for fastening a drive unit to a lawn-mower body.

In the field of lawn-mowers, by drive unit, or transmission unit, it is meant the assembly of the mechanical parts which provides to transmit the motive power of an engine, generally transmitted by means of a belt, to a transmission shaft that operates a pair of wheels. The transmission shaft rest on the body on two points by means of bushings or bearings, and is provided with gears that operate the wheels at both ends.

The currently known solutions for fastening the drive unit to the body, which employ screws, or springs, or screws combined with springs, produce a stress on the transmission shaft, stress that is more or less elevated as a function of the tension load of the belt, of the position of the drive unit with respect to the two bearing points of the transmission shaft onto the body, and of the position of the drive group fastening point onto the body with respect to the tension point of the belt.

The stress on the transmission shaft determines its deflexion, with the consequence that there is a greater wear both of the transmission shaft, where this rests on the drive unit, and on the shaft bushings or bearings onto the body. If the stress is of a certain consistency, case that occurs for example during take-off from the lawn-mower standstill condition, the transmission shaft can even break. In order to obviate these problems, the transmission shaft could be overdimensioned, but this would determine an increase in costs and in volumes.

In view of the state of the art described above, object of the present invention is to provide for a device for fastening the drive unit to the body which allows substantially to eliminate the stresses on the transmission shaft.

According to the present invention, such object is attained by means of a device for fastening a drive unit to a lawn-mower body, said drive unit comprising a pulley which receives an engine transmission belt and a transmission shaft in order to actuate a pair of wheels, characterised in that it comprises a tie rod hinged to the drive unit at one end, and elastic stress means coupled to the other end of said tie rod for tensioning said belt, said elastic means being arranged in such a way as to develop an elastic force lying on a same plane in which a tension developed by the belt lies, said elastic force having the same direction, the same intensity but opposite sense with respect to the tension exerted by the belt on the drive unit.

The characteristics and the advantages of the present invention will be rendered more evident by the following detailed description of its embodiment, illustrated as a non-restrictive example in the enclosed drawings, where:
Figure 1 is a simplified section view, according to a vertical mid plane, of a lawn-mower, which brings out the drive unit and the fastening device according to the present invention;
Figure 2 is a top plan view of the lawn-mower of Figure 1.

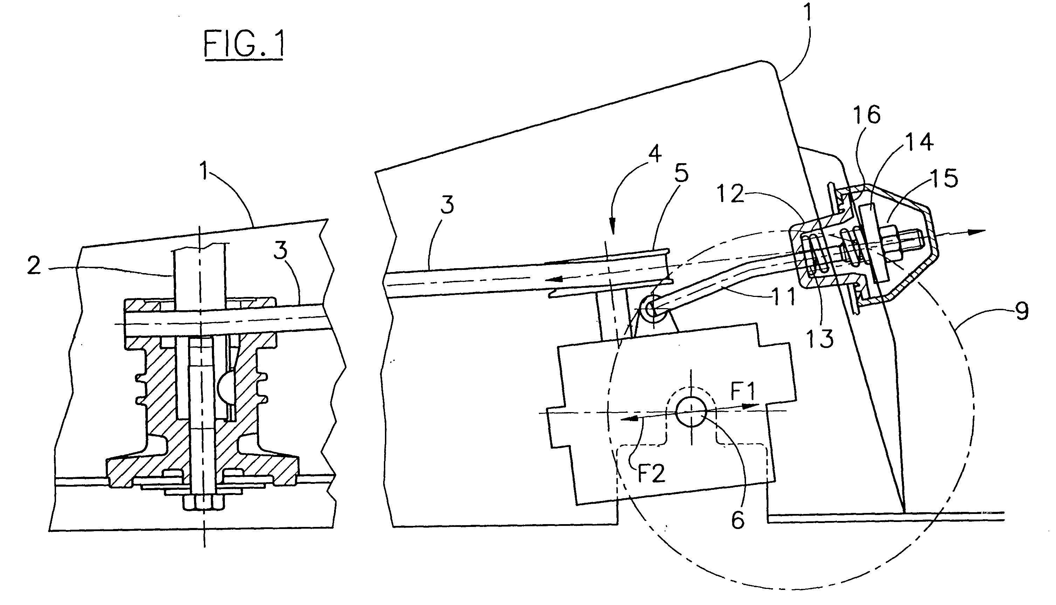

With reference to the drawings, in Figure 1 a lawn-mower is shown schematically in section according to a longitudinal vertical plane. In the figure, 1 indicates a body of lawn-mower. There is shown a driving shaft 2 that, by means of a pulley and of a transmission belt 3, transmits motion to a drive unit 4. The drive unit 4 comprises in a known way a pulley 5 that receives the transmission belt 3, and a mechanical parts assembly (that can comprise also a multiple shift gear box) for transmitting motion to a transversal transmission shaft 6.

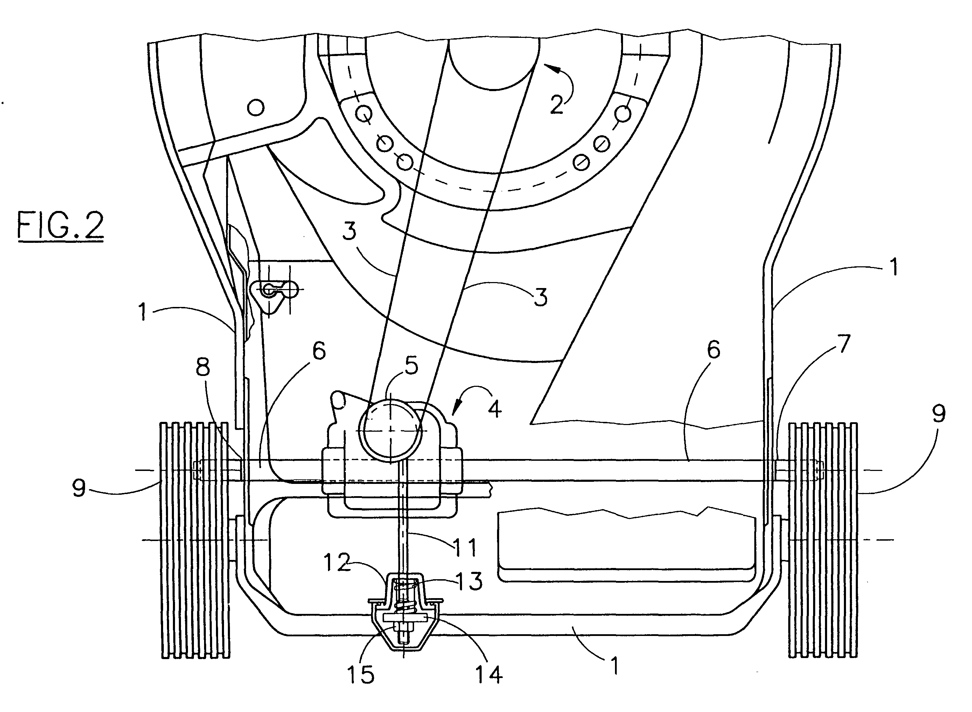

As it can be seen in Figure 2, the transmission shaft 6 rests on two points 7, 8 of the body 1 by means of bushings or bearings, and is provided in a known manner with gears that actuate the wheels 9 at its two ends.

On the upper part of the crankcase of the drive unit 4 a tie rod 11 is hinged. A final portion of the tie rod 11 lies on the same plane on which the rim of the pulley 5 lies, and is threaded at the end. The final portion of the tie rod 11 lying on the aforementioned plane passes through a hole made into a sleeve 12, around the tie rod 11 there is an helical spring 13 that on one side abuts against the bottom of the sleeve 12, while on the other is kept compressed by a washer 14 whose position along the tie rod axis 11 can be adjusted by means of a nut 15 screwed on the threaded end of the final portion of the tie rod itself. The washer 14 has greater dimensions than the sleeve, in such a way as to create a stroke end for the compression of the spring when the washer 14 abuts against the edge 16 of the sleeve 12.

The elastic reaction of the spring 13 provides the necessary force to tension the belt 3. Thanks to the fact that the elastic reaction force of the spring 13 lies along the same plane on which there lies the tension exerted by the belt 3 on the drive unit, the reaction force of the spring 13 has the same direction, the same intensity but opposite sense with respect to the tension exerted by the belt 3 (vectors F1 and F2 in Figure 1). In this way, the resultant of the two forces is null, therefore the transmission shaft 6 is not subject to deflexion.

Working on the nut 15, it is possible to increase or to decrease the elastic reaction force of the spring 13, in such a way as to increase or to decrease correspondingly the tension of the belt 3.

In addition, a certain distance between the washer 14 and the edge 16 of the sleeve 12 allows to control the correct tension to be applied to the belt during the mounting step, independently from the tolerances of the pitch development of the belt. In addition, the arrest of the washer 14 against the edge 16 of the sleeve 12 prevents that, in condition of burdensome initial take-off, the belt 3 comes out of the pulley 5.

## Claims

1. Fastening device of a drive unit (4) to a body (1) of lawn-mower, said drive unit comprising a pulley (5) which receives an engine transmission belt (3) and a transmission shaft (6) in order to actuate a pair of wheels (9), **characterised in that** it comprises a tie rod (11) hinged to the drive unit at one end, and elastic stress means (12, 13, 14, 15) coupled to the other end of said tie rod for tensioning said belt, said elastic means being arranged in such a way as to develop an elastic force (Fl) lying on a same plane in which a tension developed by the belt (3) lies, said elastic force having the same direction, the same intensity but opposite sense with respect to the tension exerted by the belt on the drive unit.

2. Fastening device according to claim 1, **characterised in that** said tie rod (11) comprises at least one tie rod portion lying on said plane, said elastic stress means (12, 13, 14, 15) comprising an helical spring (13) inserted on said tie rod portion and that on one side reacts against the body (1) and on the other co-operates with abutment means (14, 15) integral with said portion of the tie rod.

3. Fastening device according to claim 2, **characterised in that** said abutment means (14, 15) are adjustable in position along the axis of said tie rod portion in order to vary the amount of tension of the belt (3).

4. Fastening device according to claim 3, **characterised in that** said abutment means (14, 15) comprise a washer (14) inserted on said tie rod portion and a nut (15) screwed on said tie rod portion.

5. Fastening device according to claim 4, **characterised in that** it comprises stroke end means (16) of said abutment means (14, 15) for stopping upon take-off the advancement of the drive unit and therefore preventing the belt 3 from coming out of the pulley 5.

## Patentansprüche

1. Vorrichtung zur Befestigung an einer Antriebseinheit (4) an ein Gehäuse (1) eines Rasenmähers, wobei die Antriebseinheit eine Riemenscheibe (5) aufweist, die einen Motorübertragungsriemen (3) und eine Übertragungswelle (6) aufnimmt, um eine paar Räder (9) anzutreiben, **dadurch gekennzeichnet, daß** sie eine Verbindungsstange (11) aufweist, die an einem Ende an der Antriebseinheit angelenkt ist, und eine elastische Belastungsvorrichtung (12, 13, 14, 15), die mit dem anderen Ende der Verbindungsstange zum Spannen des Riemens gekoppelt ist, wobei die elastische Vorrichtung in einer solchen Art angeordnet ist, daß eine elastische Kraft (F1) entwickelt wird, die auf der selben Ebene liegt, in der eine Spannung liegt, die von dem Riemen (3) entwickelt wird, wobei die elastische Kraft die gleiche Richtung, die gleiche Intensität, jedoch die entgegengesetzte Ausrichtung in Bezug zur Spannung, die durch den Riemen auf die Antriebseinheit ausgeübt wird, hat.

2. Vorrichtung zur Befestigung gemäß Anspruch 1, **dadurch gekennzeichnet, daß** die Verbindungsstange (11) wenigstens einen Verbindungsstangenabschnitt aufweist, der auf dieser Ebene liegt, daß die elastische Belastungsvorrichtung (12, 13, 14, 15) eine Spiralfeder (13) aufweist, die auf den Verbindungsstangenabschnitt aufgesteckt ist, und daß eine Seite gegen das Gehäuse (1) wirkt, und daß andere mit einer Anschlagsvorrichtung (14, 15), die an den Verbindungsstangenabschnitt angebaut ist, zusammenwirkt.

3. Vorrichtung zur Befestigung gemäß Anspruch 2, **dadurch gekennzeichnet, daß** Anschlagvorrichtungen (14, 15) in ihrer Position entlang der Achse des Verbindungsstangenabschnitts einstellbar sind, um den Spannungsbetrag des Riemens (3) zu verändern.

4. Vorrichtung zur Befestigung gemäß Anspruch 3, **dadurch gekennzeichnet, daß** die Anschlagsvorrichtungen (14, 15) eine Beilagsscheibe (14) aufweisen, die auf den Verbindungsstangenabschnitt aufgesteckt ist, und eine Mutter (15), die auf den Verbindungsstangenabschnitt aufgeschraubt ist.

5. Vorrichtung zur Befestigung gemäß Anspruch 4, **dadurch gekennzeichnet, daß** sie eine Hubbegrenzungsvorrichtung (16) für die Anschlagsvorrichtungen (14, 15) aufweist, um das Voreilen der Antriebseinheit beim Abnehmen zu stoppen und um deshalb zu verhindern, daß der Riemen (3) aus der Riemenscheibe (5) heraus kommt.

## Revendications

1. Dispositif de fixation d'une unité d'entraînement (4) sur un carter (1) d'une tondeuse à gazon, ladite unité d'entraînement comprenant une poulie (5) qui reçoit une courroie de transmission de moteur (3) et un arbre de transmission (6) afin d'actionner une paire de roues (9), **caractérisé en ce qu'**il comporte une tige de traction (11) articulée sur l'unité d'entraînement à une extrémité, et des moyens de contrainte élastique (12, 13, 14, 15) reliés à l'autre extrémité de ladite tige de traction afin de tendre ladite courroie, lesdits moyens élastiques étant disposés de manière à développer une force élastique (F1) s'étendant dans un même plan dans lequel s'étend une tension développée par la courroie (3), ladite force élastique ayant la même direction, la même intensité, mais un sens opposé par rapport à la tension exercée par la courroie sur l'unité d'entraînement.

2. Dispositif de fixation selon la revendication 1, **caractérisé en ce que** ladite tige de traction (11) comporte au moins une partie de tige de traction s'étendant dans ledit plan, lesdits moyens de contrainte élastique (12, 13, 14, 15) comportant un ressort hélicoïdal (13) inséré sur ladite partie de tige de traction et qui réagit sur un côté contre le carter (1) et sur l'autre coopère avec des moyens de butée (14, 15) faisant partie intégrante de ladite partie de la tige de traction.

3. Dispositif de fixation selon la revendication 2, **caractérisé en ce que** lesdits moyens de butée (14, 15) sont réglables en position le long de l'axe de ladite partie de tige de traction afin de modifier la valeur de tension de la courroie (3).

4. Dispositif de fixation selon la revendication 3, **caractérisé en ce que** lesdits moyens de butée (14, 15) comportent une rondelle (14) insérée sur ladite partie de tige de traction et un écrou (15) vissé sur ladite partie de tige de traction.

5. Dispositif de fixation selon la revendication 4, **caractérisé en ce qu'**il comporte des moyens de fin de course (16) desdits moyens de butée (14, 15) destinés à arrêter lors du desserrage l'avance de l'unité d'entraînement et empêcher par conséquent la courroie (3) de sortir de la poulie (5).
